(19) **Europäisches Patentamt / European Patent Office / Office européen des brevets**

(11) **EP 3 482 438 B1**

(12) **FASCICULE DE BREVET EUROPEEN**

(45) Date de publication et mention de la délivrance du brevet:
**13.05.2020 Bulletin 2020/20**

(51) Int Cl.:
*H01M 8/1004* *(2016.01)*  *H01M 8/1018* *(2016.01)*
*H01M 8/0226* *(2016.01)*  *H01M 8/0243* *(2016.01)*
*H01M 4/86* *(2006.01)*  *H01M 4/92* *(2006.01)*
*H01M 4/88* *(2006.01)*  *H01M 4/90* *(2006.01)*

(21) Numéro de dépôt: **17745422.0**

(22) Date de dépôt: **03.07.2017**

(86) Numéro de dépôt international:
**PCT/FR2017/051806**

(87) Numéro de publication internationale:
**WO 2018/007744 (11.01.2018 Gazette 2018/02)**

(54) **ASSEMBLAGE MEMBRANE/ELECTRODES COMPRENANT UNE ANODE CATALYTIQUE À HAUTE CAPACITÉ**

MEMBRAN-ELEKTRODEN EINHEIT BEINHALTEND EINE KATALYTISCHE ANODE MIT HOHER KAPAZITÄT

MEMBRANE ELECTRODE ASSEMBLY COMPRISING A HIGH CAPACITY CATALYTIC ANODE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.07.2016 FR 1656471**

(43) Date de publication de la demande:
**15.05.2019 Bulletin 2019/20**

(73) Titulaire: **Commissariat à l'Energie Atomique et aux Energies Alternatives
75015 Paris (FR)**

(72) Inventeurs:
• **BOLLOLI, Marco
  38100 Grenoble (FR)**
• **DECOOPMAN, Benjamin
  62840 Neuve-Chapelle (FR)**
• **ROSINI, Sébastien
  38100 Grenoble (FR)**
• **VINCENT, Rémi
  38000 Grenoble (FR)**

(74) Mandataire: **GIE Innovation Competence Group
310, avenue Berthelot
69372 Lyon Cedex 08 (FR)**

(56) Documents cités:
**EP-A1- 2 273 590    EP-A1- 2 341 572
EP-A1- 2 824 741    US-A1- 2012 189 941**

**Description**

L'invention concerne les piles à combustible, et plus particulièrement les piles à combustibles incluant des plaques bipolaires entre lesquelles est disposé un assemblage membrane/électrodes à membrane échangeuse de protons.

Les piles à combustible sont notamment envisagées comme source d'énergie pour des véhicules automobiles produits à grande échelle dans le futur ou comme sources d'énergie auxiliaire dans l'aéronautique. Une pile à combustible est un dispositif électrochimique qui convertit de l'énergie chimique directement en énergie électrique. Une pile à combustible comprend un empilement en série de plusieurs cellules. Chaque cellule génère typiquement une tension de l'ordre de 1 Volt, et leur empilement permet de générer une tension d'alimentation d'un niveau plus élevé, par exemple de l'ordre d'une centaine de volts.

Parmi les types de piles à combustible connus, on peut notamment citer la pile à combustible à membrane d'échange de protons, dite PEM, fonctionnant à basse température. De telles piles à combustible présentent des propriétés de compacité particulièrement intéressantes. Chaque cellule comprend une membrane électrolytique permettant seulement le passage de protons et non le passage des électrons. La membrane présente une électrode négative sur une première face et une électrode positive sur une deuxième face, composées de platine, carbone et liant polymère conducteur protonique, pour former un assemblage membrane/électrodes dit AME. Les électrodes sont aussi en contact, sur leur deuxième face, avec des supports poreux en carbone, qui permettent la collecte du courant, le passage des gaz réactifs, et le dégagement de l'eau produite. Enfin, la membrane comporte généralement à sa périphérie deux renforts fixés sur ses faces respectives.

Au niveau de l'anode, du dihydrogène utilisé comme carburant est oxydé pour produire des protons traversant la membrane. La membrane forme ainsi un conducteur protonique. Les électrons produits par cette réaction migrent vers une plaque d'écoulement, puis traversent un circuit électrique externe à la cellule pour former un courant électrique. Au niveau de la cathode, de l'oxygène est réduit et réagit avec les protons pour former de l'eau.

La pile à combustible peut comprendre plusieurs plaques dites bipolaires, par exemple en métal, empilées les unes sur les autres. La membrane est disposée entre deux plaques bipolaires. Les plaques bipolaires peuvent comprendre des canaux et orifices d'écoulement pour guider en continu les réactifs et les produits vers/depuis la membrane. Les plaques bipolaires comprennent aussi des canaux d'écoulement pour guider du liquide de refroidissement évacuant la chaleur produite. Les produits de réaction et les espèces non réactives sont évacués par entraînement par l'écoulement jusqu'à la sortie des réseaux de canaux d'écoulement. Les canaux d'écoulement des différents écoulements sont séparés par l'intermédiaire des plaques bipolaires notamment. Les plaques bipolaires sont également électriquement conductrices pour collecter des électrons générés au niveau de l'anode. Les plaques bipolaires ont également une fonction mécanique de transmission des efforts de serrage de l'empilement, nécessaire à la qualité du contact électrique. Une conduction électronique est réalisée à travers les plaques bipolaires, une conduction ionique étant obtenue à travers la membrane. Des couches de diffusion gazeuse sont interposées entre les électrodes et les plaques bipolaires et sont en contact avec les plaques bipolaires.

Certaines conceptions de plaques bipolaires utilisent des zones d'homogénéisation pour raccorder des collecteurs d'entrée et de sortie aux différents canaux d'écoulement des plaques bipolaires. De telles zones d'homogénéisation sont généralement dépourvues d'électrodes. Les réactifs sont amenés au contact des électrodes à partir de collecteurs d'entrée et les produits sont évacués à partir de collecteurs de sortie connectés aux différents canaux d'écoulement. Les collecteurs d'entrée et les collecteurs de sortie traversent généralement l'épaisseur de l'empilement de part en part.

Les piles à combustible sont généralement limitées par un courant maximum de fonctionnement qu'elles peuvent fournir à une charge électrique. Ce courant maximum est un paramètre du dimensionnement de la pile à combustible. Ce paramètre influe ainsi sur l'encombrement, le poids et le coût de la pile à combustible. Selon l'utilisation de la pile à combustible, la gestion de pics d'appels de courant transitoires peut ainsi nécessiter un dimensionnement excessif par rapport au courant moyen d'usage de la pile à combustible.

Par ailleurs, certains phénomènes peuvent conduire à la dégradation des performances de la pile à combustible durant son fonctionnement ou du fait de la dégradation irréversible de matériaux formant la cathode. Parmi les solutions proposées afin de maintenir les performances d'une pile à combustible, le document FR3006114 propose notamment d'interrompre périodiquement l'alimentation en comburant, induisant une dépolarisation transitoire.

Cependant, les cycles d'arrêt/démarrage peuvent constituer une source de dégradation de l'assemblage membrane/électrodes AME : notamment, l'injection d'hydrogène au démarrage combinée à une présence d'air à l'anode induit une division en une zone active et une zone passive. Le fonctionnement est normal dans la zone active, mais des courants inverses sont générés dans la partie passive, ce qui engendre une corrosion d'un matériau de support de la cathode, en particulier lorsqu'il est en nanomatériau de carbone. Un phénomène similaire se produit à l'arrêt, plus particulièrement si de l'oxygène ou de l'air sont injectés dans la pile à combustible. Il est donc important de réduire l'ampleur de la dépolarisation de la cellule lors de ces événements.

Pour ainsi faire, le document US6024848 a proposé l'inclusion d'une capacité supplémentaire dans la pile à combustible, afin de pouvoir notamment fournir un pic de courant transitoire, ou de pouvoir fournir un courant en cas de pénurie de combustible. Ce document décrit l'ajout de couches supplémentaires, structurées en zone hydrophobes et hydrophiles séparées, sur les couches de diffusion gazeuse, réalisées avec une combinaison spécifique de matériaux. À l'intérieur de ces couches, les zones hydrophobes permettent le passage du gaz et les zones hydrophiles permettent d'assurer le transport d'eau et apportent la capacité supplémentaire.

Cette configuration ne permet pas de disposer entièrement de la capacité non-faradique des électrodes. En fait, lors de la décharge des capacités suite à une pénurie de combustible, les charges présentes à une électrode sont transférées vers l'autre électrode. Les capacités doivent donc être identiques à l'anode et à la cathode pour optimiser leur utilisation. Or, le chargement en catalyseur est normalement plus élevé au niveau cathodique qu'au niveau anodique, car la réaction de réduction de l'oxygène à la cathode est en effet plus difficile à réaliser que la réaction d'oxydation de l'hydrogène à l'anode. On a alors tendance à disposer d'une capacité cathodique plus élevée que la capacité anodique, qui se comportera comme agent limitant.

Pour équilibrer les capacités à l'anode et à la cathode, il est alors nécessaire d'accroître la capacité à l'anode, en accroissant par exemple l'épaisseur de sa couche combinant le matériau hydrophile et le matériau hydrophobe. Un tel ajout engendre cependant des pertes électriques par augmentation de la résistance de contact, et des limitations au transfert des réactifs à cause de l'augmentation importante de l'épaisseur de l'AME.

L'invention vise à résoudre un ou plusieurs de ces inconvénients. L'invention porte ainsi sur une pile à combustible telle que définie dans la revendication 1.

L'invention porte également sur les variantes définies dans les revendications dépendantes. L'homme du métier comprendra que chacune des caractéristiques des variantes des revendications dépendantes peut être combinée indépendamment aux caractéristiques de la revendication 1, sans pour autant constituer une généralisation intermédiaire.

D'autres caractéristiques et avantages de l'invention ressortiront clairement de la description qui en est faite ci-après, à titre indicatif et nullement limitatif, en référence aux dessins annexés, dans lesquels :

- la figure 1 est une vue en perspective éclatée d'un exemple d'empilement d'assemblages membrane/électrodes et de plaques bipolaires pour une pile à combustible;
- la figure 2 est une vue en perspective éclatée de plaques bipolaires et d'un assemblage membrane/électrodes destinés à être empilés pour former des collecteurs d'écoulement à travers l'empilement ;
- les figures 3 et 4 sont des vues de dessus d'un assemblage membrane/électrodes selon un exemple de mode de réalisation de l'invention ;
- la figure 5 est une vue en coupe transversale d'une pile à combustible incluant un assemblage membrane/électrodes selon le mode de réalisation de la figure 3;
- la figure 6 est une vue en coupe transversale d'une pile à combustible incluant une variante d'assemblage membrane/électrodes ;
- la figure 7 est une vue en coupe transversale d'une pile à combustible incluant une autre variante d'assemblage membrane/électrodes ;
- la figure 8 est une vue en coupe longitudinale d'une pile à combustible selon une déclinaison de la figure 6 ;
- la figure 9 est une vue en coupe longitudinale d'une pile à combustible selon une autre déclinaison de la figure 6 ;
- la figure 10 est un diagramme illustrant le temps d'extinction de différentes piles à combustible en fonction de la structure de leur zone réactive ;
- la figure 11 est un diagramme illustrant les performances de différentes piles à combustible en fonction de la structure de leur zone réactive.

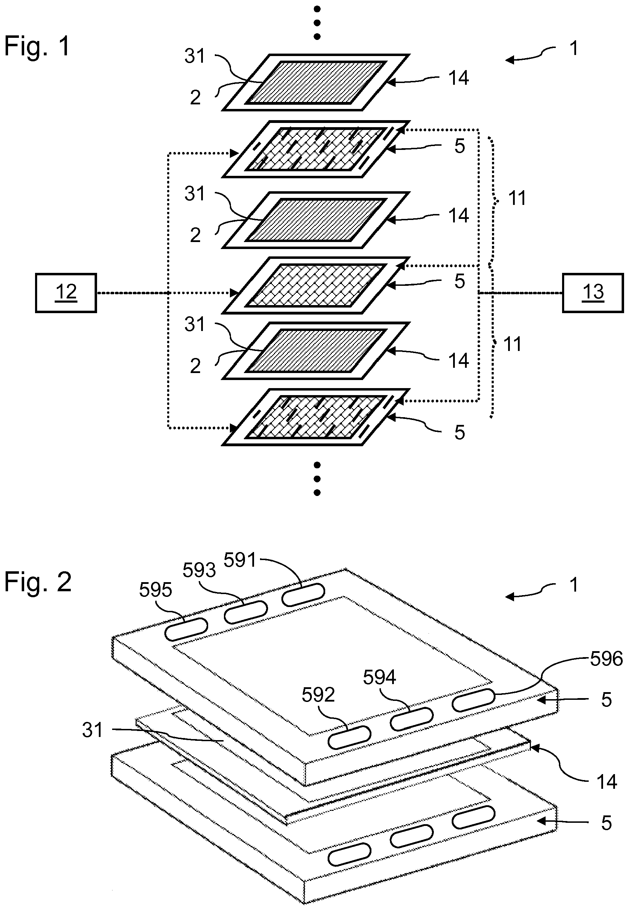

La figure 1 est une vue en perspective éclatée schématique d'un empilement de cellules 11 d'une pile à combustible 1. La pile à combustible 1 comprend plusieurs cellules 11 superposées. Les cellules 11 sont du type à membrane échangeuse de protons ou membrane à électrolyte polymère.

La pile à combustible 1 comprend une source de carburant 12. La source de carburant 12 alimente ici en dihydrogène une entrée de chaque cellule 11. La pile à combustible 1 comprend également une source de comburant 13. La source de comburant 13 alimente ici en air une entrée de chaque cellule 11, l'oxygène de l'air étant utilisé comme oxydant. Chaque cellule 11 comprend également des canaux d'échappement. Une ou plusieurs cellules 11 présentent également un circuit de refroidissement.

Chaque cellule 11 comprend un assemblage membrane/électrodes 14 ou AME 14. Un assemblage membrane/électrodes 14 comprend un électrolyte ou membrane échangeuse de protons 2, une anode 31 et une cathode (non illustrée) placées de part et d'autre de l'électrolyte et fixées sur cet électrolyte 2. La couche d'électrolyte 2 forme une membrane semi-perméable permettant une conduction protonique tout en étant imperméable aux gaz présents dans la cellule. La couche d'électrolyte empêche également un passage des électrons entre l'anode 31 et la cathode.

Entre chaque couple d'AME adjacents, une plaque bipolaire 5 est disposée. Chaque plaque bipolaire 5 définit des canaux d'écoulement anodiques et des canaux d'écoulement cathodiques. Des plaques bipolaires 5 définissent également des canaux d'écoulement de liquide de refroidissement entre deux assemblages membrane/électrodes successifs.

De façon connue en soi, durant le fonctionnement de la pile à combustible 1, de l'air s'écoule entre une AME et une plaque bipolaire 5, et du dihydrogène s'écoule entre cette AME et une autre plaque bipolaire 5. Au niveau de l'anode, le dihydrogène est oxydé pour produire des protons qui traversent l'AME. Les électrons produits par cette réaction sont collectés par une plaque bipolaire 5. Les électrons produits sont ensuite appliqués sur une charge électrique connectée à la pile à combustible 1 pour former un courant électrique. Au niveau de la cathode, de l'oxygène est réduit et réagit avec les protons pour former de l'eau. Les réactions au niveau de l'anode et de la cathode sont régies comme suit :

$$H_2 \rightarrow 2H^+ + 2e^- \text{ au niveau de l'anode ;}$$

$$4H^+ + 4e^- + O_2 \rightarrow 2H_2O \text{ au niveau de la cathode.}$$

Durant son fonctionnement, une cellule de la pile à combustible génère usuellement une tension continue entre l'anode et la cathode de l'ordre de 1V.

La figure 2 est une vue en perspective éclatée schématique de deux plaques bipolaires 5 et d'un assemblage membrane/électrodes destinés à être inclus dans l'empilement de la pile à combustible 1. L'empilement des plaques bipolaires 5 et des assemblages membrane/électrodes 14 est destiné à former une pluralité de collecteurs d'écoulement, dont la disposition est illustrée ici uniquement de manière schématique. À cet effet, des orifices respectifs sont ménagés à travers les plaques bipolaires 5 et à travers les assemblages membrane/électrodes 14. Les AME 14 comportent des renforts (non illustrés) à leur périphérie.

Les plaques bipolaires 5 comportent ainsi des orifices 591, 593 et 595 au niveau d'une première extrémité, et des orifices 592, 594 et 596 au niveau d'une deuxième extrémité opposée à la première. L'orifice 591 sert par exemple pour former un collecteur d'alimentation en carburant, l'orifice 592 sert par exemple pour former un collecteur d'évacuation de résidus de combustion, l'orifice 594 sert par exemple pour former un collecteur d'alimentation en liquide de refroidissement, l'orifice 593 sert par exemple pour former un collecteur d'évacuation de liquide de refroidissement, l'orifice 596 sert par exemple pour former un collecteur d'alimentation en comburant, et l'orifice 595 sert par exemple pour former un collecteur d'évacuation d'eau de réaction.

Les orifices des plaques bipolaires 5 et des assemblages membrane/électrodes 14 (soit les orifices ménagés dans les renforts non illustrés) sont disposés en vis-à-vis afin de former les différents collecteurs d'écoulement.

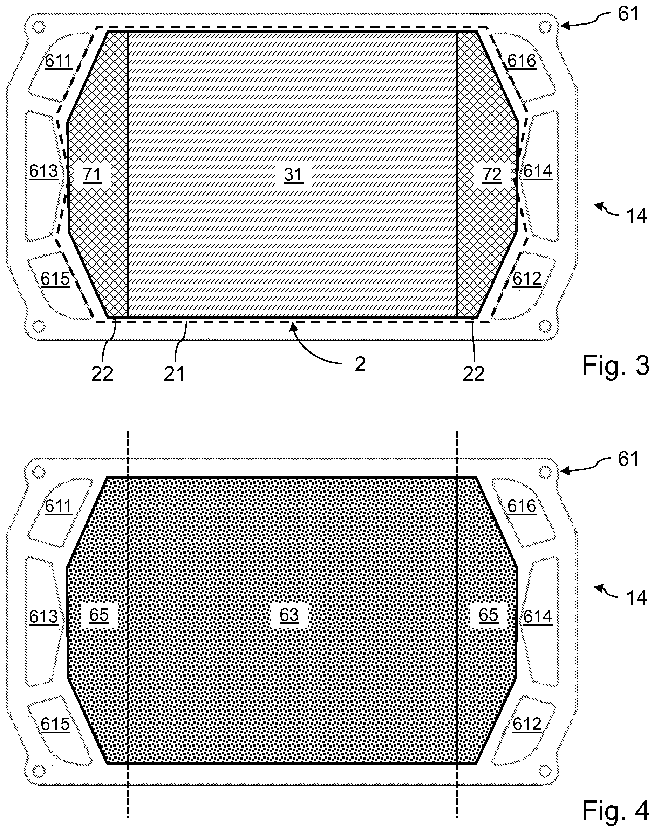

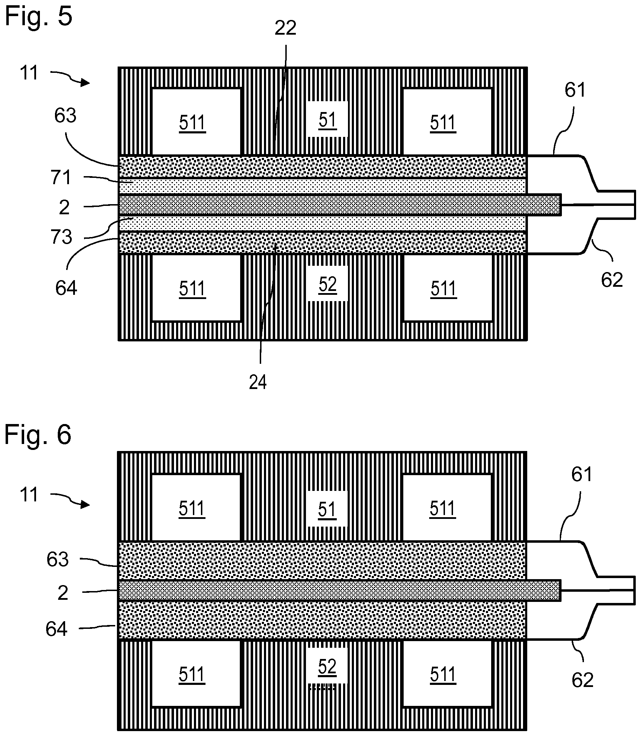

La figure 3 est une vue de dessus d'un assemblage membrane/électrodes 14 selon un exemple de mode de réalisation de l'invention en l'absence de couche de diffusion gazeuse. La figure 4 est une vue de dessus de l'assemblage membrane/électrodes 14 de la figure 3, muni d'une couche de diffusion gazeuse 63. La figure 5 est une vue en coupe transversale d'une cellule 11 de pile à combustible, selon un perfectionnement de l'invention, au niveau d'une bordure d'une zone de liaison détaillée par la suite.

L'assemblage membrane/électrodes 14 inclut la membrane 2, une anode 31 et une cathode (non illustrée) solidarisées de part et d'autre de la membrane 2. L'assemblage membrane/électrodes 14 inclut en outre avantageusement des renforts 61 et 62. Les renforts 61 et 62 sont fixés à la périphérie de faces respectives de la membrane 2.

Le renfort 61 comporte par ailleurs des orifices 611, 613 et 615 ménagés de côté par rapport à une ouverture médiane non référencée. Les orifices 611, 613 et 615 sont destinés à être positionnés en regard des orifices 591, 593 et 595 des plaques bipolaires 51 et 52 détaillées par la suite. Le renfort 61 comporte des orifices 612, 614 et 616 ménagés à l'opposée des orifices 611, 613 et 615, par rapport à l'ouverture médiane. Les orifices 612, 614 et 616 sont destinés à être positionnés en regard des orifices 592, 594 et 596 des plaques bipolaires 51 et 52.

Une couche de diffusion gazeuse 63 est en contact avec l'anode 31 à travers un orifice médian ménagé à travers le renfort 61. Une couche de diffusion gazeuse inférieure (non illustrée) est en contact avec la cathode à travers un orifice médian ménagé à travers le renfort 62.

L'anode 31 définit une zone active 21 dans laquelle intervient la réaction électrochimique anodique. Une plaque bipolaire 51 fait face à la couche de diffusion gazeuse 63 et comporte des canaux d'écoulement 511 pour guider un carburant tel que du dihydrogène jusqu'à la zone active 21. Le collecteur 591 est ainsi en communication avec d'autres canaux d'écoulement de la plaque bipolaire 51, ménagés dans la zone active. Une zone de liaison ou zone d'homogénéisation 22 est ménagée entre la zone active 21 et les collecteurs d'écoulement 592, 594 et 596. Une autre zone de liaison ou zone d'homogénéisation 22 est ménagée entre la zone active 21 et les collecteurs d'écoulement 591, 593 et 595. Une zone de liaison 22 est destinée de façon connue en soi à homogénéiser l'écoulement de carburant entre le collecteur 591 et les canaux d'écoulement anodiques, l'autre zone de liaison 22 étant destinée à homogénéiser l'écoulement anodique de sortie. Les zones de liaison 22 débutent au niveau des extrémités longitudinales de l'anode 31.

Une autre plaque bipolaire 52 fait face à la couche de diffusion gazeuse 64 et comporte des canaux d'écoulement pour guider un comburant tel que de l'air jusqu'à la zone active cathodique. La cathode définit une zone active dans laquelle intervient la réaction électrochimique cathodique. Une zone de liaison ou zone d'homogénéisation est ménagée entre la zone active cathodique et les collecteurs d'écoulement 592, 594 et 596, une autre zone de liaison étant ménagée entre la zone active cathodique et les collecteurs d'écoulement 591, 593 et 595. Une zone de liaison est destinée de façon connue en soi à homogénéiser l'écoulement de comburant entre les canaux d'écoulement cathodique et le collecteur 596. L'autre zone de liaison est destinée de façon connue en soi à homogénéiser l'écoulement entre les canaux d'écoulement cathodique et le collecteur de sortie 595. Dans un souci de simplification, les canaux d'écoulement de liquide de refroidissement (optionnels) à travers les plaques bipolaires 51 et 52 ne sont pas illustrés.

Le chargement en catalyseur est normalement plus élevé au niveau de la cathode qu'au niveau de l'anode car la réaction de réduction de l'oxygène à la cathode est plus difficile à réaliser que la réaction d'oxydation de l'hydrogène à l'anode. On a alors tendance à disposer d'une capacité cathodique plus élevée que la capacité anodique. L'inclusion d'une couche capacitive sous l'anode pour équilibrer les capacités anodique et cathodique engendre des difficultés de fabrication d'une AME 14 et induit une augmentation non négligeable des pertes électriques du fait des résistances de contact introduites par l'ajout de cette couche capacitive sous l'anode. L'accroissement du chargement en catalyseur à l'anode peut améliorer la capacité spécifique de l'anode mais s'avère rédhibitoire pour son prix de revient.

Selon l'invention, l'anode 31 présente une composition qui permet d'accroître sa capacité intrinsèque, sans altérer ses performances catalytiques ni accroître excessivement son prix de revient.

La composition de l'anode 31 comprend un mélange incluant :

- un conducteur protonique connu en soi ;
- du platine supporté par de la poudre de carbone, connu en soi ;
- du carbone additionnel ne supportant pas de catalyseur, et présentant une surface spécifique BET au moins égale à $200 m^2/g$, c'est-à-dire une haute surface spécifique, avantageusement au moins égale à $600 m^2/g$, voire au moins égale à $1000 m^2/g$.

L'homme du métier a un a priori à l'encontre de l'utilisation d'un tel carbone à haute surface spécifique comme support de catalyseur, réputé limiter la diffusion gazeuse et être particulièrement sensible à la corrosion. Etonnement, les inventeurs ont constaté que l'utilisation du mélange incluant ce carbone comme carbone additionnel permettait d'augmenter sensiblement la capacité de l'anode, sans pour autant altérer ses performances.

Le carbone additionnel pourra être du carbone distribué sous les références commerciales EC600-JD par la société Azkonobel, ou Vulcan par la société Cabot. Avantageusement, le carbone additionnel représente avantageusement une proportion en poids d'au moins 15% (garantissant une capacité électrique optimale pour l'anode 31) de l'anode 31, et d'au plus 45% de l'anode 31 (pour ne pas dégrader les performances catalytiques de l'anode 31). Avantageusement, le carbone additionnel est une poudre de noir de carbone. Avantageusement, l'anode 31 inclut une masse surfacique de carbone dans le mélange au moins égale à $0,2 mg.cm^{-2}$, de préférence au moins égale à $0,3 mg.cm^{-2}$.

Le conducteur protonique pourra par exemple être un ionomère tel que du PFSA, par exemple distribué sous les références commerciales Nafion par la société Dupont de Nemours ou Aquivion par la société Solvay. Le conducteur protonique représente avantageusement une proportion en poids comprise entre 25 et 35% de l'anode 31.

Le platine supporté par de la poudre de carbone pourra par exemple utiliser de la poudre de carbone distribuée sous la référence commerciale Vulcan par la société Cabot. Le platine pourra représenter une proportion en poids comprise entre 30 et 50% de l'ensemble comprenant ce platine et son support en poudre de carbone. Le platine et son support de poudre de carbone représentent avantageusement une proportion en poids au moins égale à 30% de l'anode 31. Pour conserver un prix de revient réduit, la masse surfacique en platine de l'anode 31 est avantageusement au plus égale à $0,15 mg.cm^{-2}$, de préférence au plus égale à $0,1 mg.cm^{-2}$.

Pour équilibrer au mieux les capacités de l'anode et de la cathode, l'anode 31 sera avantageusement dimensionnée de sorte que sa capacité soit au moins égale à 65% de la capacité de la cathode.

Des essais ont été réalisés avec différentes compositions du mélange de l'anode 31.

Une première composition de mélange pour une anode 31 d'un assemblage membrane/électrodes 14 selon l'invention est la suivante :

| | Masse (g) | % matière sèche dans l'encre avant séchage | % matière sèche dans la composition de l'anode obtenue |
|---|---|---|---|
| Catalyseur distribué par Tanaka sous référence commerciale TEC10V50E | 4,00 | 9% | 23,26% Pt + 25.92 % Carbone |
| Dispersion d'ionomère de référence commerciale Nafion D2020 | 9,60 | 21% | 26,23% |

(suite)

|  | Masse (g) | % matière sèche dans l'encre avant séchage | % matière sèche dans la composition de l'anode obtenue |
|---|---|---|---|
| Carbone haute surface spécifique additionnel, de référence commerciale Ketjenblack EC600-JD | 2,00 | 4% | 24,59% |
| Éthanol | 2,25 | 5% | 0,0% |
| Eau Distillée | 27,75 | 61% | 0,0% |

Une telle composition d'encre a permis d'obtenir un assemblage membrane/électrodes 14 avec une anode 31 comportant un chargement de 0,103mg.cm$^{-2}$ en Platine et de 0,109mg.cm$^{-2}$ en carbone additionnel à haute surface spécifique.

Une deuxième composition de mélange pour une anode 31 d'un assemblage membrane/électrodes 14 selon l'invention est la suivante :

|  | Masse (g) | % matière sèche dans l'encre avant séchage | % matière sèche dans la composition de l'anode obtenue |
|---|---|---|---|
| Catalyseur distribué par Tanaka sous référence commerciale TEC10V50E | 2,60 | 6% | 15,12% Pt + 16,82% Carbone |
| Dispersion d'ionomère de référence commerciale Nafion D2020 | 9,60 | 21% | 26,23% |
| Carbone haute surface spécifique additionnel, de référence commerciale Ketjenblack EC600-JD | 3,40 | 7% | 41,80% |
| Éthanol | 2,25 | 5% | 0,0% |
| Eau Distillée | 27,75 | 61% | 0,0% |

Une telle composition d'encre a permis d'obtenir un assemblage membrane/électrodes 14 avec une anode 31 comportant un chargement de 0,101 mg.cm$^{-2}$ en Platine et de 0,297mg.cm$^{-2}$ en carbone additionnel à haute surface spécifique.

Une troisième composition de mélange pour une anode 31 d'un assemblage membrane/électrodes 14 selon l'invention est la suivante :

|  | Masse (g) | % matière sèche dans l'encre avant séchage | % matière sèche dans la composition de l'anode obtenue |
|---|---|---|---|
| Catalyseur distribué par Tanaka sous référence commerciale TEC10V50E | 17 | 4,6% | 12,21% Pt + 13,61% Carbone |
| Dispersion d'ionomère de référence commerciale Nafion D2020 | 77,71 | 20,9% | 26,23% |
| Carbone haute surface spécifique additionnel, de référence commerciale Vulcan XC-72 | 31,57 | 8,5% | 47,95% |
| Éthanol | 21 | 5,6% | 0,0% |
| Eau Distillée | 224,64 | 60,4% | 0,0% |

Une telle composition d'encre a permis d'obtenir un assemblage membrane/électrodes 14 avec une anode 31 comportant un chargement de 0,079mg.cm$^{-2}$ en Platine et de 0,398mg.cm$^{-2}$ en carbone additionnel à haute surface spécifique.

Les compositions d'encre précédentes présentent toutes une proportion de matière sèche au moins égale à 15% en masse.

Une première anode de référence a été utilisée pour comparaison, à partir d'une encre de composition suivante :

| | Masse (g) | % matière sèche dans l'encre avant séchage | % matière sèche dans la composition de l'anode obtenue |
|---|---|---|---|
| Catalyseur distribué par Tanaka sous référence commerciale TEC10V30E | 6 | 13% | 21,39% Pt + 52,38% Carbone |
| Dispersion d'ionomère de référence commerciale Nafion D2020 | 9,6 | 21% | 26,23% |
| Éthanol | 212,25 | 5% | 0,0% |
| Eau Distillée | 27,75 | 61% | 0,0% |

Une telle composition d'encre a permis d'obtenir un assemblage membrane/électrodes avec une anode comportant un chargement de 0,098mg.cm$^{-2}$ en Platine.

Une deuxième anode de référence a été utilisée pour comparaison, à partir d'une encre de composition suivante :

| | Masse (g) | % matière sèche dans l'encre avant séchage | % matière sèche dans la composition de l'anode obtenue |
|---|---|---|---|
| Catalyseur distribué par Tanaka sous référence commerciale TEC10EA30E-HT | 5 | 13% | 22,28% Pt + 51,49% Carbone |
| Dispersion d'ionomère de référence commerciale Nafion D2020 | 8 | 21% | 26,23% |
| Éthanol | 0 | 0% | 0,0% |
| Eau Distillée | 1,88 | 61% | 0,0% |

Une telle composition d'encre a permis d'obtenir un assemblage membrane/électrodes avec une anode comportant un chargement de 0,125mg.cm$^{-2}$ en Platine.

Selon une première expérimentation, on a coupé finement 500mg de chaque électrode (avec un support carbone) parmi la première à troisième compositions selon l'invention et les première et deuxième électrodes de référence. On a ensuite réalisé des mesures d'adsorption/désorption de gaz à 77K (au moyen d'un appareil distribué sous la référence commerciale Tristar II par la société Micromeritics). Les surfaces spécifiques BET obtenues pour les différentes électrodes sont reportées dans le tableau suivant et comparées aux surfaces spécifiques BET de certains carbones haute surface spécifique.

| Matériau | Surface active (m$^2$.g$^{-1}$) |
|---|---|
| Première composition de mélange de l'invention | 38,6 $\pm$ 0,9 |
| Deuxième composition de mélange de l'invention | 47,4 $\pm$ 0,8 |
| Troisième composition de mélange de l'invention | 26,5 $\pm$ 3,5 |
| Electrode de référence 1 | $\approx$ 26 |
| Electrode de référence 2 | $\approx$ 18,5 |
| Carbone haute surface spécifique référence commerciale Vulcan XC-72 | $\approx$ 220 |
| Carbone haute surface spécifique référence commerciale Ketjenblack EC600-JD | $\approx$ 1400 |

Pour les première et deuxième compositions de mélanges, présentant un carbone additionnel présentant peu de graphite, la surface spécifique BET de l'anode 31 obtenue est relativement élevée. Pour la troisième composition de mélange, avec un carbone additionnel présentant davantage de graphite, la surface spécifique BET est plus basse.

Selon une deuxième expérimentation, chaque électrode parmi les première à troisième compositions selon l'invention et les première et deuxième électrodes de référence ont été fixées à un assemblage membrane/électrodes par pressage à chaud à 135°C. La membrane choisie est distribuée sous la référence commerciale Gore-Tex 735.18MX. La cathode de l'assemblage était identique dans tous les cas, à savoir incluant un catalyseur distribué sous la référence commerciale Tanaka TEC36V52 à 34,6% en poids de platine au final, 39,17% en poids de carbone de support de platine au final, et 26,23% en poids d'un ionomère Nafion D2020 au final (avec une capacité de 63 mF.cm$^{-2}$).

Des mesures de voltampérométrie cyclique ont été effectuées pour chaque assemblage, avec une vitesse de balayage de 50mV.s$^{-1}$. On a réalisé un calcul de capacité Can des anodes selon la formule suivante :

$$C_{an} \ (mF.cm^{-2}) = J_{an} \ (mA.cm^{-2}) / \ v \ (V.s^{-1})$$

Avec Jan la densité de courant associé au processus capacitif de stockage d'énergie, mesuré à 450mV, et v la vitesse de balayage.

| Anode | $C_{an}$ (mF.cm$^{-2}$) |
|---|---|
| Première composition de mélange de l'invention | 38,2 |
| Deuxième composition de mélange de l'invention | 46,1 |
| Troisième composition de mélange de l'invention | 39,2 |
| Electrode de référence 1 | 27,2 |
| Electrode de référence 2 | 9,0 |

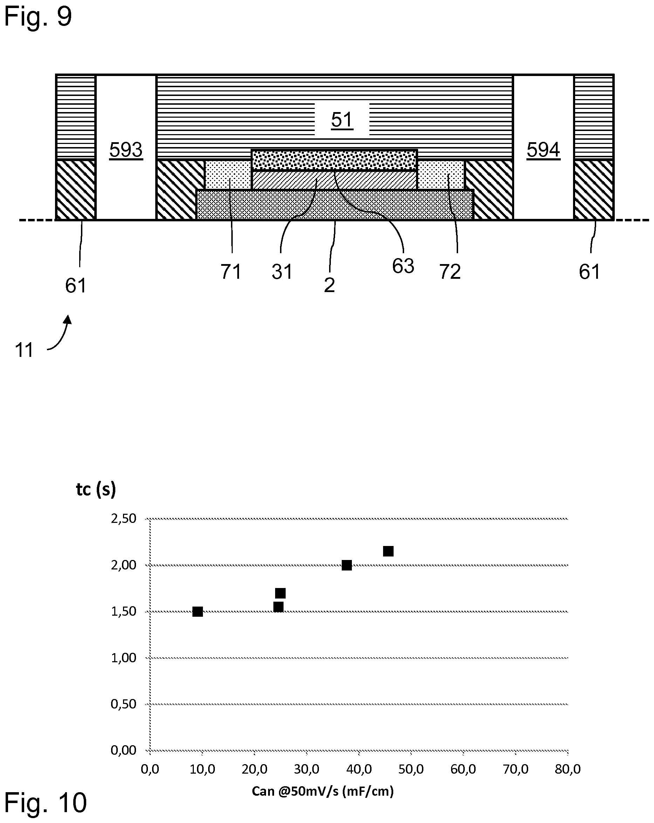

Selon une troisième expérimentation, chaque assemblage membrane/électrodes de la deuxième expérimentation a été testé en pénurie d'air. A cet effet, on a interrompu le débit d'air à la cathode, ce qui conduit à la dépolarisation de la cellule. L'énergie stockée dans les capacités de l'anode et de la cathode permet de maintenir transitoirement la polarisation de la cellule. La durée de ce maintien correspond à un temps d'extinction, c'est-à-dire le décalage entre l'instant où on interrompt le débit et le moment où le potentiel de cellule descend sous un seuil, fixé arbitrairement à une valeur de 400mV dans le cas présent. La figure 10 illustre les durées d'extinction (ou temps de chute tc) pour les différents assemblages membrane/électrodes, en illustrant le lien avec leur capacité anodique (correspondant à la deuxième expérimentation). Les résultats illustrent bien l'allongement de la durée d'extinction avec l'augmentation de la capacité de l'anode 31 permise par l'invention.

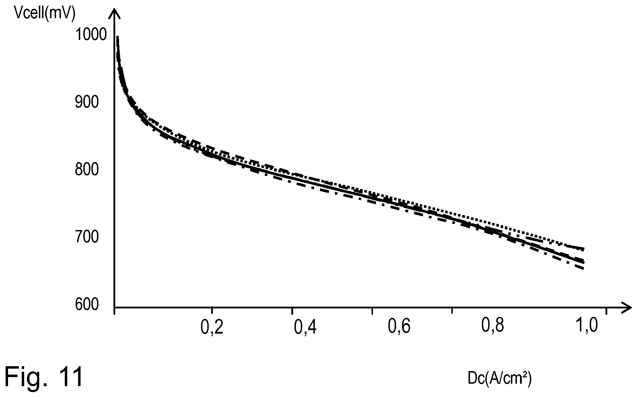

Les performances électrochimiques des différents assemblages membrane/électrodes (première à troisième compositions de mélange selon l'invention, première et deuxième anodes de référence) sont illustrées à la figure 11. La figure 11 illustre en ordonnée la tension de cellule Vcell, en abscisse la densité de courant Dc. La courbe en pointillés correspond à la première anode de référence. La courbe en double point tiret correspond à la seconde anode de référence. La courbe en trait plein correspond à la première composition d'anode selon l'invention. La courbe en tiret point correspond à la deuxième composition d'anode selon l'invention. La courbe en trait discontinu correspond à la troisième composition d'anode selon l'invention. Les performances ont été obtenues pour des densités de courant inférieures à 1A.cm$^{-2}$ avec une humidité relative de 70%, une température de 70°C et une pression de 1,4 bar.

On peut constater que les performances des différents assemblages membrane/électrodes sont extrêmement proches sur l'ensemble de la gamme de fonctionnement de la cellule. Les modifications de l'anode 31 n'affectent ainsi pas significativement la tension de cellule en fonctionnement normal. L'augmentation de capacité d'une anode 31 selon l'invention n'altère donc pas les performances électrochimiques d'une pile à combustible. Par ailleurs, en l'absence d'ajout d'une couche supplémentaire à l'anode 31, on évite d'ajouter une résistance de contact correspondante.

L'anode 31 pourra être appliquée sur la membrane sous forme d'une encre incluant ces composants, par exemple par impression. Outre ces composants, l'encre inclura un solvant tel que de l'eau ou de l'éthanol. Les proportions en poids indiquées correspondent à une anode 31 sèche, après élimination du solvant. L'encre inclura un pourcentage en masse de matière sèche de préférence au moins égal à 15%. D'autres procédés come l'enduction, la sérigraphie ou la projection pourront être utilisés.

Selon une autre alternative, l'anode 31 peut être formée sur la couche de diffusion gazeuse 63, par exemple par enduction.

Pour faciliter la fabrication de l'encre, le carbone à haute surface spécifique additionnel est avantageusement introduit en premier dans le solvant. Les encres incluant les différents composants des mélanges sont avantageusement homogénéisées à l'aide d'un mélangeur.

Selon un perfectionnement de l'invention, l'assemblage membrane/électrodes 14 comporte en outre une couche capacitive 71 sur une zone de liaison 22, et une couche capacitive 72 sur une autre zone de liaison 22. Avantageusement, les couches capacitives 71 et 72 occupent la majeure partie de la surface de leur zone de liaison 22 respective, afin d'optimiser la capacité intégrée dans la pile à combustible 1.

Les couches capacitives 71 et 72 sont en contact électrique avec la plaque bipolaire 51, de façon à pouvoir se décharger/recharger au besoin. Pour présenter une capacité optimale, les couches capacitives 71 et 72 incluent un mélange de carbone présentant une surface spécifique BET au moins égale à $200 m^2/g$ et d'un matériau conducteur protonique, avantageusement au moins égale à $500 m^2/g$, voire au moins égale à $700 m^2/g$. Un tel carbone présente une haute surface spécifique afin de pouvoir stocker un maximum de charges électriques. Le matériau conducteur protonique est destiné à favoriser le transport des protons jusqu'aux sites de stockage des charges électriques dans le carbone.

L'implantation d'une couche capacitive sur une zone de liaison anodique de la membrane 14 permet de réaliser cette couche capacitive sans compromettre la structure et les performances de l'anode 31.

Le carbone du mélange pourra par exemple être du noir de carbone distribué sous la référence commerciale Ketjenblack CJ300 par la société Lion Speciality Chemicals, ou le noir de carbone distribué sous la référence commerciale Acetylene Black AB50X GRIT par la société Chevron Phillips Chemical.

Le conducteur protonique du mélange pourra par exemple être un liant conducteur protonique, par exemple du PFSA tel que commercialisé sous les références commerciales Nafion, Aquivion ou Flemion, du PEEK, ou du polyamine.

Le mélange des couches capacitives 71 et 72 présente avantageusement une proportion en poids de ce carbone au moins égale à 40%, de préférence au moins égale à 55%. Avantageusement la proportion en poids de ce carbone est au plus égale à 80%, voire au plus égale à 65%. Le mélange des couches capacitives 71 et 72 présente avantageusement une proportion en poids du conducteur protonique au moins égale à 20%, de préférence au moins égale à 35%. Avantageusement la proportion en poids du conducteur protonique est au plus égale à 60%, voire au plus égale à 45%.

Dans l'exemple illustré, la couche de diffusion gazeuse 63 comporte des parties 65 débordant longitudinalement de part et d'autre par rapport à la zone réactive 21. Ces parties 65 recouvrent respectivement la couche capacitive 71 et la couche capacitive 72.

Les couches capacitives 71 et 72 présentent avantageusement une épaisseur comprises entre 10 et 50nm dans la configuration illustrée aux figures 3 à 5.

Les couches capacitives 71 et 72 seront avantageusement dimensionnées pour présenter une capacité surfacique au moins égale à $600m F/cm^2$.

Les couches capacitives 71 et 72 sont avantageusement dépourvues de matériau catalyseur, par exemple dépourvue de tout matériau catalyseur présents dans l'anode 31.

L'assemblage membrane/électrodes 14 comporte ici en outre une couche capacitive 73 sur la zone de liaison. Avantageusement, une autre couche capacitive recouvre une autre zone de liaison réalisée sur la membrane 2, à l'opposée de la zone de liaison par rapport à la cathode.

Avantageusement, ces couches capacitives du côté cathodique occupent la majeure partie de la surface de leur zone de liaison respective, afin d'optimiser la capacité intégrée dans la pile à combustible 1.

Afin de présenter un bon équilibrage des couches capacitives du côté anodique et du côté cathodique, les couches capacitives du côté cathodique présentent avantageusement une même composition, une même épaisseur, et/ou une même géométrie que les couches capacitives du côté anodique. Les couches capacitives anodiques et les couches capacitives cathodiques sont ici superposées.

L'électrode 31 et/ou les couches capacitives 71 et 72 peuvent être réalisées par application d'encres sur la membrane 2, par exemple par enduction, sérigraphie ou projection.

La figure 6 est une vue en coupe d'une cellule 11 de pile à combustible, incluant une variante d'assemblage membrane/électrodes 14, au niveau d'une bordure d'une zone de liaison. L'assemblage membrane/électrodes 14 inclut la même structure de membrane 2, d'anode et de cathode, de renforts 61 et 62 et de plaques bipolaires 51 et 52 que dans la variante de la figure 3. Dans cette variante, les couches de diffusion gazeuse 63 et 64 présentent la même géométrie que dans la variante de la figure 3. Le mélange de carbone et de conducteur protonique est ici inclus dans les parties des couches de diffusion gazeuse 63 et 64 qui recouvrent les zones de liaison. Le mélange peut par exemple être inclus dans les couches de diffusion gazeuse 63 et 64 par imprégnation. Les couches de diffusion gazeuse 63 et 64 n'incluent avantageusement pas le mélange dans leur zone médiane recouvrant leur zone réactive. Les couches de diffusion gazeuse 63 et 64 peuvent présenter une épaisseur comprise entre 150 et 300nm par exemple.

Selon cette variante, on peut inclure une couche capacitive à l'aplomb d'une zone de liaison, sans accroître l'épaisseur de l'empilement au niveau de cette zone de liaison.

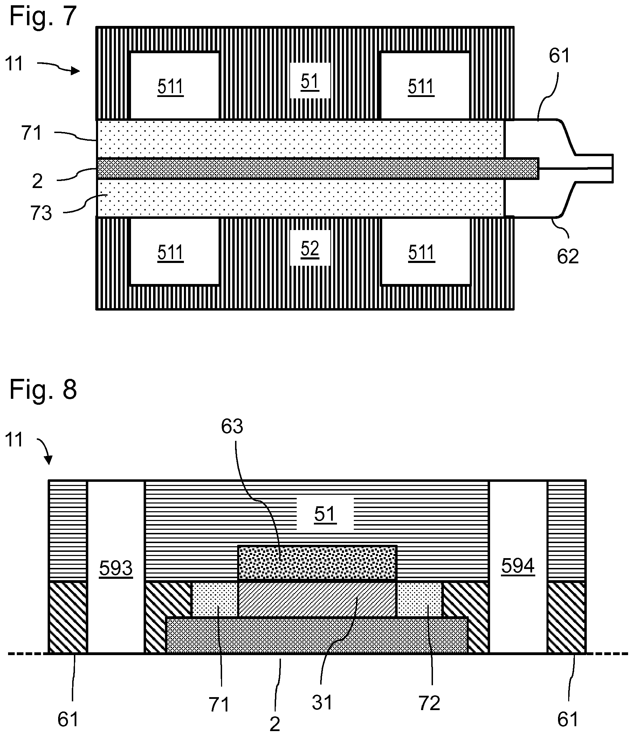

La figure 7 est une vue en coupe d'une cellule 11 de pile à combustible, incluant une autre variante d'assemblage membrane/électrodes 14, au niveau d'une bordure d'une zone de liaison. L'assemblage membrane/électrodes 14 inclut la même structure de membrane 2, d'anode et de cathode, de renforts 61 et 62 et de plaques bipolaires 51 et 52 que dans la variante de la figure 3. Dans cette variante, les couches de diffusion gazeuse 63 et 64 recouvrent respectivement l'anode 31 et la cathode. Dans cette variante, les couches de diffusion gazeuse 63 et 64 ne s'étendent pas jusqu'aux zones de liaison, et ne recouvrent donc pas ces zones de liaison.

Le mélange de carbone et de conducteur protonique forme ici une couche, qui s'étend en continu entre la membrane 2 et leur plaque bipolaire respective 51 ou 52. Une telle couche de mélange peut typiquement présenter une épaisseur comprise entre 40 et 150nm.

Selon cette variante, on peut éviter de prolonger les couches de diffusion gazeuse jusque dans les zones de liaison.

La figure 8 est une vue en coupe longitudinale de la partie supérieure d'une cellule 11 selon une autre déclinaison de la variante de la figure 7. Dans cette déclinaison, les couches capacitives 71 et 72 présentent une épaisseur égale à celle de l'anode 31, et donc inférieure à l'épaisseur cumulée de l'anode 31 et de la couche de diffusion gazeuse 63. La plaque bipolaire 51 présente ainsi une zone surélevée en vis-à-vis d'une zone de liaison, afin de compenser cette différence d'épaisseur.

La figure 9 est une vue en coupe longitudinale de la partie supérieure d'une cellule 11 selon une déclinaison de la variante de la figure 7. Dans cette déclinaison, les couches capacitives 71 et 72 présentent une épaisseur supérieure à celle de l'anode 31, mais inférieure à l'épaisseur cumulée de l'anode 31 et de la couche de diffusion gazeuse 63. La plaque bipolaire 51 présente ainsi une zone surélevée en vis-à-vis d'une zone de liaison, afin de compenser cette différence d'épaisseur.

Bien qu'on ait décrit un mode de réalisation avec des couches capacitives dans les zones de liaison de part et d'autre de l'anode, on peut également envisager de ne réaliser une couche capacitive que dans une zone de liaison d'un côté de l'anode.

**Revendications**

1. Pile à combustible (1), comprenant :

   - un assemblage membrane/électrodes (14), incluant :

      - une membrane échangeuse de protons (2) ;
      - une anode (31) en contact avec une première face de la membrane et incluant un mélange incluant un polymère conducteur protonique et du platine supporté par de la poudre de carbone ;
      - ledit mélange inclut en outre du carbone additionnel ne supportant pas de catalyseur et présentant une surface spécifique BET au moins égale à $200m^2/g$ ;

      - **caractérisée en ce que** l'assemblage membrane/électrodes (14) comporte une première zone active (21) recouverte par l'anode (31), et une première zone de liaison (22) non recouverte par ladite anode (31) ;
      - comprenant en outre des plaques de guidage d'écoulement (51, 52) entre lesquelles l'assemblage membrane/électrodes (14) est disposé, lesdites plaques de guidage d'écoulement étant traversées par au moins un premier collecteur d'écoulement (591) en communication avec ladite anode (31), ladite première zone de liaison (22) étant disposée entre ledit premier collecteur d'écoulement (591) et la première zone active ;
      - dans laquelle l'assemblage membrane/électrodes (14) comporte en outre une première couche capacitive (71) incluant un autre mélange incluant du carbone présentant une surface spécifique BET au moins égale à $200m^2/g$ et un matériau conducteur protonique, ladite première couche capacitive étant disposée sur ladite première zone de liaison (22).

2. Pile à combustible (1) selon la revendication 1, dans laquelle ledit carbone additionnel présente une surface spécifique BET au moins égale à $600m^2/g$.

3. Pile à combustible (1) selon la revendication 1 ou 2, dans laquelle ledit carbone additionnel comprend une poudre de noir de carbone.

4. Pile à combustible (1) selon l'une quelconque des revendications précédentes, dans laquelle ledit mélange inclut ledit carbone additionnel avec une proportion en poids au moins égale à 15%.

5. Pile à combustible (1) selon l'une quelconque des revendications précédentes, dans laquelle ledit mélange inclut ledit carbone additionnel avec une proportion en poids au plus égale à 45%.

**6.** Pile à combustible (1) selon l'une quelconque des revendications précédentes, dans laquelle ladite anode présente une surface spécifique BET au moins égale à 35 m$^2$/g.

**7.** Pile à combustible (1) selon l'une quelconque des revendications précédentes, comprenant en outre une cathode, la capacité de l'anode (31) étant au moins égale à 65% de la capacité de la cathode.

**8.** Pile à combustible (1) selon l'une quelconque des revendications précédentes, dans laquelle l'anode (31) inclut une masse surfacique de platine au plus égale à 0,15mg.cm$^{-2}$.

**9.** Pile à combustible (1) selon l'une quelconque des revendications précédentes, dans laquelle l'anode (31) inclut une masse surfacique de carbone additionnel dans le mélange au moins égale à 0,1 mg.cm-$^2$.

**10.** Pile à combustible (1) selon l'une quelconque des revendications précédentes, comprenant en outre une couche de diffusion gazeuse (63) positionnée entre ladite anode (31) et une desdites plaques de guidage d'écoulement (51), ladite couche de diffusion gazeuse (63) comportant une partie (65) recouvrant ladite première zone de liaison (22), cette partie (65) de la couche de diffusion gazeuse incluant ledit autre mélange de matériau conducteur protonique et de carbone.

**11.** Pile à combustible (1) selon l'une quelconque des 1 à 9, dans laquelle ladite couche de diffusion gazeuse (63) ne recouvre pas ladite première zone de liaison (22), ledit autre mélange de matériau conducteur protonique et de carbone s'étendant en continu entre ladite membrane (2) et une desdites plaque (51) de guidage d'écoulement.

**12.** Pile à combustible (1) selon l'une quelconque des revendications précédentes, dans laquelle ladite première couche capacitive (71) comprend une proportion en poids dudit matériau conducteur protonique comprise entre 20 et 60%, et une proportion en poids dudit carbone comprise entre 40 et 80%.

**13.** Pile à combustible (1) selon l'une quelconque des revendications précédentes, dans laquelle ladite première couche capacitive (71) est dépourvue de catalyseur.

**14.** Pile à combustible (1) selon l'une quelconque des revendications précédentes, dans laquelle l'assemblage membrane/électrodes (14) comporte une couche de renfort (61) solidarisée à la membrane (2) et entourant ladite première couche capacitive (71).

**Patentansprüche**

**1.** Brennstoffzelle (1), welche umfasst:

    - eine Membran-Elektroden-Einheit (14), welche aufweist:

        - eine Protonenaustauschmembran (2);
        - eine Anode (31), die mit einer ersten Seite der Membran in Kontakt steht und eine Mischung beinhaltet, die ein protonisch leitendes Polymer und Platin, das von Kohlenstoffpulver getragen wird, enthält;
        - wobei die Mischung außerdem zusätzlichen Kohlenstoff enthält, der keinen Katalysator trägt und eine spezifische BET-Oberfläche von wenigstens 200 m$^2$/g aufweist;

        - **dadurch gekennzeichnet, dass** die Membran-Elektroden-Einheit (14) einen ersten aktiven Bereich (21), der von der Anode (31) bedeckt ist, und einen ersten Verbindungsbereich (22), der nicht von der Anode (31) bedeckt ist, aufweist;
        - welche außerdem Strömungsführungsplatten (51, 52) umfasst, zwischen denen die Membran-Elektroden-Einheit (14) angeordnet ist, wobei die Strömungsführungsplatten von wenigstens einem ersten Strömungssammler (591) durchquert werden, der mit der Anode (31) in Verbindung steht, wobei der erste Verbindungsbereich (22) zwischen dem ersten Strömungssammler (591) und dem ersten aktiven Bereich angeordnet ist;
        - wobei die Membran-Elektroden-Einheit (14) außerdem eine erste kapazitive Schicht (71) aufweist, die eine weitere Mischung beinhaltet, welche Kohlenstoff, der eine spezifische BET-Oberfläche von wenigstens 200 m$^2$/g aufweist, und ein protonisch leitendes Material enthält, wobei die erste kapazitive Schicht auf dem ersten Verbindungsbereich (22) angeordnet ist.

**2.** Brennstoffzelle (1) nach Anspruch 1, wobei der zusätzliche Kohlenstoff eine spezifische BET-Oberfläche von wenigstens 600 m$^2$/g aufweist.

**3.** Brennstoffzelle (1) nach Anspruch 1 oder 2, wobei der zusätzliche Kohlenstoff ein Rußpulver umfasst.

**4.** Brennstoffzelle (1) nach einem der vorhergehenden Ansprüche, wobei die Mischung den zusätzlichen Kohlenstoff mit einem Gewichtsanteil von wenigstens 15 % enthält.

**5.** Brennstoffzelle (1) nach einem der vorhergehenden Ansprüche, wobei die Mischung den zusätzlichen Kohlenstoff mit einem Gewichtsanteil von wenigstens 45 % enthält.

**6.** Brennstoffzelle (1) nach einem der vorhergehenden Ansprüche, wobei die Anode eine spezifische BET-Oberfläche von wenigstens 35 m$^2$/g aufweist.

**7.** Brennstoffzelle (1) nach einem der vorhergehenden Ansprüche, welche außerdem eine Kathode aufweist, wobei die Kapazität der Anode (31) wenigstens 65 % der Kapazität der Kathode beträgt.

**8.** Brennstoffzelle (1) nach einem der vorhergehenden Ansprüche, wobei die Anode (31) eine flächenbezogene Masse von Platin von höchstens 0,15 mg.cm$^{-2}$ aufweist.

**9.** Brennstoffzelle (1) nach einem der vorhergehenden Ansprüche, wobei die Anode (31) eine flächenbezogene Masse von zusätzlichem Kohlenstoff in der Mischung von wenigstens 0,1 mg.cm$^{-2}$ aufweist.

**10.** Brennstoffzelle (1) nach einem der vorhergehenden Ansprüche, welche außerdem eine Gasdiffusionsschicht (63) umfasst, die zwischen der Anode (31) und einer der Strömungsführungsplatten (51) positioniert ist, wobei die Gasdiffusionsschicht (63) einen Teil (65) aufweist, der den ersten Verbindungsbereich (22) bedeckt, wobei dieser Teil (65) der Gasdiffusionsschicht die weitere Mischung aus protonisch leitendem Material und Kohlenstoff enthält.

**11.** Brennstoffzelle (1) nach einem der Ansprüche 1 bis 9, wobei die Gasdiffusionsschicht (63) nicht den ersten Verbindungsbereich (22) bedeckt, wobei sich die weitere Mischung aus protonisch leitendem Material und Kohlenstoff durchgehend zwischen der Membran (2) und einer der Strömungsführungsplatten (51) erstreckt.

**12.** Brennstoffzelle (1) nach einem der vorhergehenden Ansprüche, wobei die erste kapazitive Schicht (71) einen Gewichtsanteil des protonisch leitenden Materials zwischen 20 und 60 % und einen Gewichtsanteil des Kohlenstoffs zwischen 40 und 80 % umfasst.

**13.** Brennstoffzelle (1) nach einem der vorhergehenden Ansprüche, wobei die erste kapazitive Schicht (71) nicht mit einem Katalysator versehen ist.

**14.** Brennstoffzelle (1) nach einem der vorhergehenden Ansprüche, wobei die Membran-Elektroden-Einheit (14) eine Verstärkungsschicht (61) aufweist, die mit der Membran (2) fest verbunden ist und die erste kapazitive Schicht (71) umgibt.

**Claims**

**1.** Fuel cell (1), comprising:

- a membrane/electrode assembly (14), including:

- a proton exchange membrane (2);
- an anode (31) in contact with a first face of the membrane and including a mixture including a proton conducting polymer and platinum supported on carbon powder;
- said mixture also includes additional carbon not supporting a catalyst and having a BET specific surface area at least equal to 200 m$^2$/g;

- **characterized in that** the membrane/electrode assembly (14) comprises a first active zone (21) covered by the anode (31), and a first linking zone (22) not covered by said anode (31);

- further comprising flow guiding plates (51, 52), between which the membrane/electrode assembly (14) is arranged, said flow guiding plates being traversed by at least one first flow collector (591) in communication with said anode (31), said first linking zone (22) being arranged between said first flow collector (591) and the first active zone;
- in which the membrane/electrode assembly (14) further comprises a first capacitive layer (71) including another mixture including carbon having a BET specific surface area at least equal to 200 m$^2$/g and a proton-conducting material, said first capacitive layer being arranged on said first linking zone (22).

2. Fuel cell (1) according to Claim 1, in which said additional carbon has a BET specific surface area at least equal to 600 m$^2$/g.

3. Fuel cell (1) according to Claim 1 or 2, in which said additional carbon comprises a carbon black powder.

4. Fuel cell (1) according to any one of the preceding claims, in which said mixture includes said additional carbon with a proportion by weight at least equal to 15%.

5. Fuel cell (1) according to any one of the preceding claims, in which said mixture includes said additional carbon with a proportion by weight at most equal to 45%.

6. Fuel cell (1) according to any one of the preceding claims, in which said anode has a BET specific surface area at least equal to 35 m$^2$/g.

7. Fuel cell (1) according to any one of the preceding claims, further comprising a cathode, the capacitance of the anode (31) being at least equal to 65% of the capacitance of the cathode.

8. Fuel cell (1) according to any one of the preceding claims, in which the anode (31) includes a weight per surface area of platinum at most equal to 0.15 mg.cm$^{-2}$.

9. Fuel cell (1) according to any one of the preceding claims, in which the anode (31) includes a weight per surface area of additional carbon in the mixture at least equal to 0.1 mg.cm$^{-2}$.

10. Fuel cell (1) according to any one of the preceding claims, further comprising a gas diffusion layer (63) positioned between said anode (31) and one of said flow guiding plates (51), said gas diffusion layer (63) comprising a portion (65) covering said first linking zone (22), this portion (65) of the gas diffusion layer including said other mixture of proton-conducting material and of carbon.

11. Fuel cell (1) according to any one of Claims 1 to 9, in which said gas diffusion layer (63) does not cover said first linking zone (22), said other mixture of proton-conducting material and of carbon extending continuously between said membrane (2) and one of said flow guiding plates (51).

12. Fuel cell (1) according to any one of the preceding claims, in which said first capacitive layer (71) comprises a proportion by weight of said proton-conducting material of between 20 and 60%, and a proportion by weight of said carbon of between 40 and 80%.

13. Fuel cell (1) according to any one of the preceding claims, in which said first capacitive layer (71) lacks catalyst.

14. Fuel cell (1) according to any one of the preceding claims, in which the membrane/electrode assembly (14) comprises a reinforcing layer (61) fastened to the membrane (2) and surrounding said first capacitive layer (71).

Fig. 1

Fig. 2

Fig. 3

Fig. 4

## Fig. 5

## Fig. 6

Fig. 7

11

511    51    511

61

71

2

73

511    52    511

62

Fig. 8

11

63

51

593    594

61    71    2    31    72    61

Fig. 9

Fig. 10

Fig. 11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3006114
- US 6024848 A